# DEMANDE DE BREVET EUROPEEN

(11) **EP 0 699 581 A1**
(43) Date de publication de la demande: **06.03.1996**
(21) Numéro de dépôt: 95401964.2
(22) Date de dépôt: 28.08.1995
(51) Int. Cl.: B64G 1/64, F41F 3/052

(54) **Dispositif de liaison déverrouillable entre deux objets utilisables notamment dans le domaine spatial**

(30) Priorité: 30.08.1994 FR 9410423
(71) Demandeur: AEROSPATIALE Société Nationale Industrielle, F-75781 Paris Cédex 16 (FR)
(72) Inventeur: Geyer, Freddy, F-83440 Tanneron (FR); Vezain, Gérard, F-06210 Mandelieu (FR); Roux, Christian, F-06130 Grasse (FR)
(74) Mandataire: Poulin, Gérard

(57) **Abrégé**

La liaison déverrouillable entre deux objets tels qu'un satellite (10) et un engin spatial (12) est assurée par un dispositif qui comprend une liaison à clef rotative (60). Le déverrouillage de cette liaison est assuré par la rotation d'une bague (54) portant la clef (60). Cette rotation est elle-même induite par le déplacement axial d'une tige (44) portant la bague (54), commandé par un ressort (50). Ce ressort est libéré par un système initiateur (86), pyrotechnique ou autre.

## Description

L'invention concerne un dispositif de liaison, à déverrouillage rapide, destiné à relier provisoirement deux objets en perturbant le moins possible l'attitude et la vitesse relative de ces objets au moment de leur séparation.

Un tel dispositif trouve une application privilégiée dans le lancement et la mise à poste d'objets tels que des satellites, des sondes, etc. à partir d'un engin de transport spatial tel qu'un lanceur, une sonde interplanétaire, etc..

Comme l'illustrent notamment les documents FR-A-2 661 466 et US-A-3 196 745, deux objets destinés à être séparés l'un de l'autre dans l'espace sont le plus souvent reliés par l'intermédiaire d'un écrou segmenté, maintenu en prise sur une ou plusieurs pièces filetées par une bague de verrouillage entourant normalement cet écrou. Lorsqu'ils sont actionnés, des moyens initiateurs de déverrouillage, le plus souvent pyrotechniques, décalent axialement la bague par rapport à l'écrou segmenté. L'écrou se sépare alors des pièces filetées, de telle sorte que la liaison entre les deux objets est déverrouillée.

Ce type de dispositif de liaison déverrouillable donne généralement des résultats satisfaisants. Cependant, ce sont les moyens initiateurs de déverrouillage, généralement pyrotechniques, qui provoquent directement la séparation en déplaçant axialement la bague de verrouillage. Du fait du caractère surabondant et totalement incontrôlé de l'énergie dissipée par les moyens initiateurs de déverrouillage, l'attitude et la vitesse transmises à l'objet éjecté sont donc très difficiles à maîtriser. De plus, la pièce filetée mâle est éjectée avec l'objet.

Il existe également des dispositifs de liaison dans lesquels le déverrouillage, commandé par des moyens pyrotechniques, se traduit par la rupture d'une pièce.

Comme les précédents, ces dispositifs induisent un choc lorsqu'ils sont actionnés. De plus, ils ne sont pas adaptés à l'éjection d'un objet de masse importante à faible vitesse. En effet, la pièce dont la rupture est commandée par les moyens pyrotechniques doit alors être dimensionnée pour tenir les efforts importants qu'elle est appelée à subir lors du lancement. L'énergie libérée par les moyens pyrotechniques doit permettre la rupture de cette pièce et la mise en vitesse de l'objet, ce qui n'est pas possible dans tous les cas. En outre, un corps étranger est ici encore éjectée avec l'objet.

L'invention a précisément pour objet un dispositif de liaison déverrouillable de conception originale, dans lequel le choc pyrotechnique qui est généralement à l'origine de la séparation n'est pas appliqué directement dans la zone dans laquelle se produit cette séparation, de telle sorte que les efforts appliqués entre les objets soient limités et connus, afin d'autoriser un contrôle relativement précis de l'attitude et de la vitesse de l'objet libéré.

L'invention a aussi pour objet un dispositif de liaison déverrouillable utilisable quelle que soit la masse de l'objet à éjecter, et dans lequel l'éjection de l'objet n'est pas accompagnée de l'éjection d'un corps étranger.

Conformément à l'invention, ce résultat est obtenu au moyen d'un dispositif de liaison déverrouillable entre deux objets, comprenant un premier organe prévu pour être fixé à un premier desdits objets, un deuxième organe lié au deuxième objet, des moyens de raccordement déverrouillables, au travers desquels le premier et le deuxième organes sont normalement en prise, et des moyens initiateurs de déverrouillage, associés au deuxième objet, caractérisé par le fait qu'il comprend de plus :
- un mécanisme de blocage déverrouillable immobilisant normalement le deuxième organe par rapport au deuxième objet, et dont un déverrouillage est commandé par les moyens initiateurs de déverrouillage ;
et par le fait que les moyens de raccordement déverrouillables comprennent un système à clef rotative dont un déverrouillage est commandé par un déplacement du deuxième organe dans une direction déterminée par rapport au deuxième objet.

De préférence, des moyens élastiques tendent à déplacer le deuxième organe dans ladite direction déterminée.

Dans cet agencement, les moyens initiateurs de déverrouillage, généralement pyrotechniques, agissent sur le mécanisme de blocage déverrouillable, qui n'assure pas la liaison entre les deux objets. Le deuxième organe est alors libéré et déplacé à une vitesse contrôlée par la force calibrée exercée par les moyens élastiques. Cette vitesse contrôlée permet, du fait de l'inertie de l'objet à éjecter, de garantir le déverrouillage de la clé par rotation avant que l'éjection proprement dite ne soit effectuée. Cela a pour conséquences une rotation du système à clef et un déverrouillage parfaitement maîtrisé des moyens de raccordement déverrouillables qui assuraient auparavant la jonction entre les deux objets. Le déverrouillage par rotation ainsi que le caractère indirect de l'action des moyens initiateurs de déverrouillage généralement pyrotechniques permettent de maîtriser l'attitude de l'objet libéré ainsi que sa vitesse.

Dans une forme de réalisation préférentielle de l'invention, le deuxième organe comprend une tige dont une extrémité est normalement fixée au deuxième objet par le mécanisme de blocage déverrouillable. La direction déterminée est alors orientée selon l'axe de la tige, en éloignement du deuxième objet.

Dans cette forme de réalisation préférentielle, la tige supporte une bague rotative portant au moins une clef normalement en appui contre une face du premier organe, dans une première position angulaire de la bague par rapport à ce premier organe. La clef est apte à traverser une entaille formée dans ladite face, dans une seconde position angulaire de la bague par rapport au premier organe. Des moyens sont prévus pour commander une rotation de la bague de la première à la seconde position angulaire lorsque la tige se déplace dans la direction prédéterminée.

Avantageusement, les moyens pour commander une rotation de la bague comprennent au moins un ensemble doigt-rainure interposé entre la bague et une pièce liée au deuxième objet.

Cette pièce peut être prévue pour être fixée au deuxième objet et pour supporter les moyens initiateurs de déverrouillage. Elle peut aussi être constituée par un piston éjecteur annulaire, apte à se déplacer dans la direction prédéterminée par rapport au deuxième objet.

Le mécanisme de blocage déverrouillable peut comprendre un écrou segmenté, normalement en prise sur une partie filetée du deuxième organe et en appui contre une surface de butée liée au deuxième objet. Un manchon encercle normalement cet écrou segmenté de façon à pouvoir être décalé axialement par rapport à l'écrou segmenté lors d'un actionnement des moyens initiateurs de déverrouillage.

On décrira à présent, à titre d'exemple non limitatif, une forme de réalisation préférentielle de l'invention, en se référant aux dessins annexés, dans lesquels :
- la figure 1 est une vue en coupe longitudinale représentant un dispositif de liaison déverrouillable conforme à l'invention, associé à un dispositif de commande d'écartement ; et
- la figure 2 est une vue en coupe selon la ligne II-II de la figure 1.

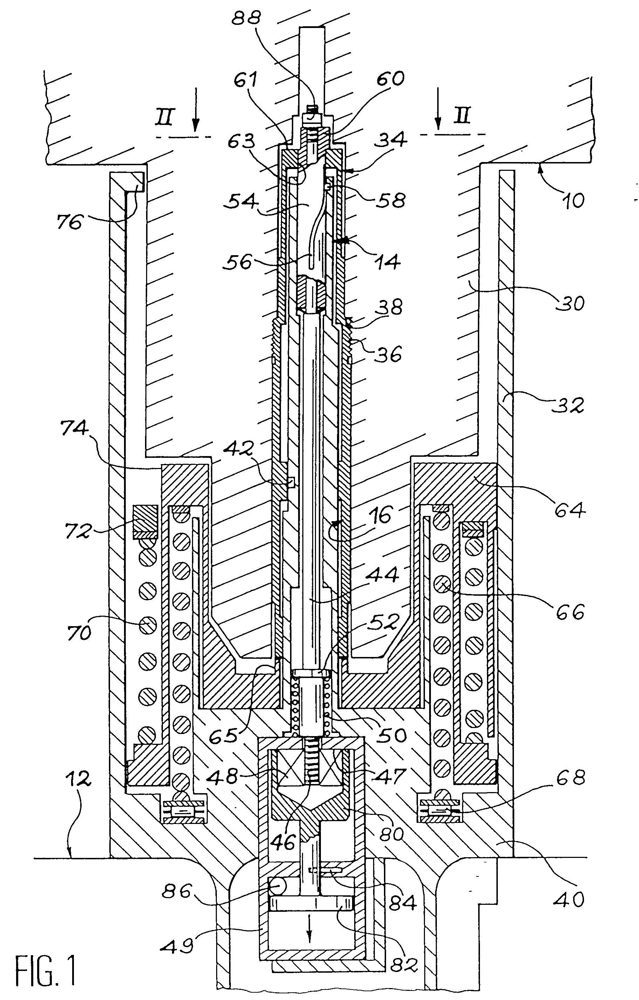

La figure 1 représente un dispositif de liaison déverrouillable conforme à l'invention, associé à un dispositif de commande d'écartement. Ces deux dispositifs sont interposés entre un objet 10 tel qu'un satellite ou une sonde et un objet 12 constitué dans ce cas par un engin spatial tel qu'un lanceur, une sonde interplanétaire, etc..

L'objet 10 comporte une partie en saillie 30, de forme tubulaire, qui pénètre normalement dans un boîtier tubulaire 32, solidaire de l'engin spatial 12, lorsque l'objet 10 est relié à ce dernier par un dispositif de liaison déverrouillable conforme à l'invention.

La partie en saillie 30 de l'objet 10 est vissée sur un premier organe constitué par un tube de guidage étagé 34 comportant intérieurement un alésage étagé 16. Cet agencement permet de fixer rigidement à l'objet 10 le tube de guidage 34.

De façon plus précise, la fixation du tube de guidage 34 dans la partie en saillie 30 est assurée en vissant un filetage 36 formé sur le tube de guidage 34 dans un taraudage complémentaire formé dans la partie en saillie 30, jusqu'à la venue en butée d'une partie épaulée du tube de guidage 34 contre un épaulement 38 prévu à cet effet dans la partie en saillie 30.

Le boîtier tubulaire 32 est fixé rigidement à l'engin spatial 12 par l'intermédiaire d'un support 40, normalement placé en face de l'extrémité de la partie en saillie 30. Dans sa partie centrale, ce support 40 porte un mât de guidage 14 normalement reçu dans l'alésage étagé 16. Le mât de guidage 14 est coaxial au boîtier tubulaire 32 et orienté perpendiculairement au support 40.

Si l'on désire engendrer un mouvement de spin de l'objet 10 lors de son éjection, on usine sur la surface extérieure étagée 20 du mât de guidage 14 une rainure hélicoïdale 42 formant un moyen de guidage hélicoïdal. Un doigt (non représenté) fait saillie radialement dans cette rainure hélicoïdale 42, à partir de l'alésage étagé 16 formé dans le tube de guidage 34.

L'objet 10 est normalement maintenu dans la position illustrée sur la figure 1, c'est-à-dire relié rigidement à l'engin spatial 12, par un dispositif de liaison déverrouillable conforme à l'invention. Il est à noter que ce dispositif de liaison déverrouillable peut être, selon le cas, indépendant du dispositif de commande d'écartement ou intégré à ce dispositif comme l'illustre la figure 1.

Le dispositif de liaison déverrouillable par lequel l'objet 10 est normalement bridé sur l'engin spatial 12 comprend un deuxième organe constitué par une tige de liaison 44 qui traverse sur toute sa longueur le mât de guidage 14. A cet effet, ce dernier présente une configuration tubulaire.

A son extrémité tournée vers l'engin spatial 12, la tige de liaison 44 comporte une partie filetée 46 normalement emprisonnée dans un écrou segmenté 48 qui prend appui contre une surface de butée 47 formée dans un boîtier 49 assujetti au support 40. Un ressort 50 faiblement taré, logé dans le mât tubulaire de guidage 14, est interposé entre le boîtier 49 et une collerette 52 formée sur la tige de liaison 44. Ce ressort 50 tend à déplacer la tige de liaison 44 selon son axe longitudinal en éloignement de l'engin spatial 12. Il est comprimé entre la collerette 52 et le boîtier 49 lorsque la tige de liaison 44 est vissée dans l'écrou segmenté 48, jusqu'à la venue en appui sur le boîtier 49 d'un épaulement formé sur la tige 44.

L'écrou segmenté 48 est normalement encerclé par un manchon 80 solidaire d'un piston 82. L'ensemble formé par le manchon 80 et le piston 82 est apte à coulisser axialement dans le boîtier 49, vers le bas en considérant la figure 1. Une goupille frangible 84 maintient normalement cet ensemble dans la position haute illustrée sur la figure 1, dans laquelle le manchon 80 encercle l'écrou segmenté 48.

Des moyens initiateurs de déverrouillage constitués par exemple par un système pyrotechnique 86 sont montés dans le boîtier 49. La mise en oeuvre de ce système pyrotechnique 86 a pour effet une augmentation brusque de pression dans la chambre formée au-dessus du piston 82. L'ensemble formé par le piston 82 et le manchon 80 se déplace alors vers le bas, après avoir cassé la goupille 84.

A son extrémité opposée à celle qui est emprisonnée dans l'écrou segmenté 48, la tige de liaison 44 supporte une bague 54. Plus précisément, cette bague 54 est apte à tourner sur la tige de liaison 44 tout en étant immobilisée en translation par rapport à cette dernière. Sur sa surface extérieure, la bague 54 comporte au moins une rainure hélicoïdale 56 dans laquelle est reçu un doigt 58 qui fait saillie radialement vers l'intérieur à partir du mât de guidage 14. L'ensemble doigt 58-rainure 56 a pour effet de transformer une translation de la tige de liaison 44 par rapport au mât de guidage 14 en une rotation de la bague 54 autour de la tige de liaison.

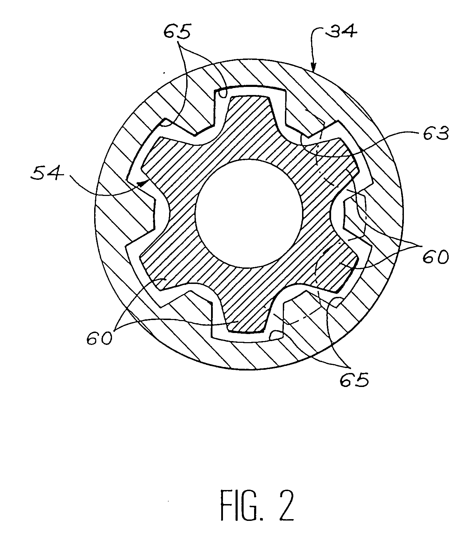

A son extrémité tournée vers l'objet 10, la bague 54 fait saillie au travers d'une fenêtre 63 (figure 2) formée dans une cloison terminale du tube de guidage 34. Au-delà de cette fenêtre 63, la bague 54 comporte une ou plusieurs branches 60 orientées radialement vers l'extérieur. Ces branches 60 forment une clef contre laquelle est normalement en appui une face 61, tournée vers l'objet 10, de la cloison terminale du tube de guidage 34. Cette position correspond à une position angulaire de la bague 54 définie par la position rétractée de verrouillage de la tige de liaison 44 dans le mât de guidage 14, illustrée sur la figure 1.

En revanche, une rotation de la bague 54 provoquée par un déplacement de la tige de liaison 44 vers l'extrémité du mât de guidage 14 c'est-à-dire vers une position en saillie de déverrouillage de cette tige 44, a pour effet d'amener la clef formée par les branches radiales 60 en face d'entailles complémentaires 65 (figure 2) formées radialement dans la fenêtre 63. Par conséquent, l'extrémité de la bague 54 peut alors traverser librement la cloison terminale du tube de guidage 34. Cette position, illustrée en trait plein sur la figure 2, correspond au déverrouillage du dispositif de liaison, c'est-à-dire qu'elle permet de séparer l'objet 10 de l'engin spatial 12 par un coulissement du tube de guidage 34 sur le mât de guidage 14.

Le passage de la tige de liaison 44 de sa position rétractée de verrouillage à sa position en saillie de déverrouillage est commandé par le ressort 50, lorsque l'extrémité filetée 46 de la tige de liaison est libérée de l'écrou segmenté 48.

Le dispositif de commande d'écartement qui est associé au dispositif de liaison déverrouillable sur la figure 1 comporte en outre des moyens d'éjection. Ces moyens d'éjection permettent de commander l'éjection de l'objet 10 par rapport à l'engin spatial 12 lorsque le dispositif de liaison qui relie normalement ces deux organes est déverrouillé. Ces moyens d'éjection sont logés entre le support 40 et l'extrémité de la partie en saillie 30 de l'objet 10, à l'intérieur du boîtier tubulaire 32.

Dans la forme de réalisation illustrée sur la figure 1, les moyens d'éjection comprennent un piston éjecteur 64 monté coulissant dans le boîtier tubulaire 32 de façon à être normalement en appui contre la face d'extrémité du tube de guidage 34 solidaire rigidement de l'objet 10, lorsque le dispositif de liaison est verrouillé. Ce piston éjecteur 64 est un piston annulaire, disposé coaxialement autour du mât de guidage 14, sans contact avec ce dernier. Il comporte une jupe centrale 65 normalement emprisonnée entre le support 40 et l'extrémité adjacente du tube de guidage 34.

Les moyens d'éjection comportent en outre un ressort hélicoïdal de compression 66 dont une extrémité prend appui sur le support 40 par l'intermédiaire d'une butée à rouleau 68 et dont l'extrémité opposée prend appui sur une face du piston éjecteur 64 tournée vers ce support 40.

Dans l'exemple de réalisation préférentielle illustré sur la figure 1, des moyens ralentisseurs sont associés au piston éjecteur 64, afin que la vitesse de ce dernier soit ralentie juste avant que les surfaces cylindriques complémentaires du mât de guidage 14 et de l'alésage étagé 16 perdent contact simultanément lors de l'éjection de l'objet 10. Ceci permet au choc dur de fin de course du piston 64 de ne se produire que lorsqu'il existe un jeu radial entre le mât 14 et l'objet 10.

Sur la figure 1, ces moyens ralentisseurs comprennent un ressort hélicoïdal de compression 70, à faible course, placé autour du piston éjecteur 64 et dont les extrémités sont normalement en appui contre deux épaulements en vis-à-vis formés sur ce piston. Plus précisément, l'extrémité du ressort de compression 70 tournée vers l'objet 10 est en appui sur l'un des épaulements précité par l'intermédiaire d'une bague 72.

Une ou plusieurs entailles 74 (de préférence, trois à 120°, pour garantir un bon appui et éviter toute dissymétrie lors du choc de ralentissement) sont formées dans la partie du piston éjecteur 64 tournée vers l'objet 10, en face de la bague 72. A son extrémité tournée vers l'objet 10, le boîtier tubulaire 32 comporte autant de bras 76 que le piston éjecteur 64 comporte d'entailles 74. Ces bras 76 sont placés en face des entailles 74, de façon à pouvoir venir en appui contre la bague 72 lors de l'éjection de l'objet 10.

Lors du montage, on visse d'abord la tige de liaison 44 dans l'écrou 48 en comprimant le ressort 50. On place ensuite sur la tige 44 l'ensemble formé par le piston éjecteur 64, le tube de guidage 34 et la bague 54, que l'on maintient en vissant un écrou 88 sur l'extrémité filetée de la tige de liaison 44. L'objet 10 est ensuite vissé sur le filetage 36 du tube de guidage 34.

Comme on l'a déjà indiqué, le dispositif de liaison déverrouillable selon l'invention peut être associé à des moyens d'éjection différents de ceux qui viennent d'être décrits ou même totalement dissocié de ces moyens d'éjection, sans sortir du cadre de l'invention. Ainsi, dans une variante de réalisation non représentée, le mât de guidage 14, solidaire du support 40, est supprimé et remplacé par un mât solidaire du piston éjecteur 64. L'ensemble doigt 58-rainure 56 est alors interposé entre la bague 54 et ce mât.

Grâce à l'utilisation d'un dispositif de verrouillage à clef qui sépare les deux objets par un mouvement de rotation commandé par un ressort, on réalise une séparation contrôlée et sans choc. Les moyens initiateurs, généralement pyrotechniques, n'agissent pas directement sur ce dispositif à clef. Cette caractéristique contribue à une bonne maîtrise de l'attitude et de la vitesse de l'objet éjecté.

## Revendications

1. Dispositif de liaison déverrouillable entre deux objets (10,12), comprenant un premier organe (34) prévu pour être fixé à un premier (10) desdits objets, un deuxième organe (44) lié au deuxième objet (12), des moyens de raccordement déverrouillables (34), au travers desquels le premier et le deuxième organes sont normalement en prise, et des moyens (86) initiateurs de déverrouillage, associés au deuxième objet, caractérisé par le fait qu'il comprend de plus :
- un mécanisme de blocage déverrouillable (80,82,84) immobilisant normalement le deuxième organe (44) par rapport au deuxième objet (12), et dont un déverrouillage est commandé par les moyens (86) initiateurs de déverrouillage ;
et par le fait que les moyens de raccordement déverrouillables comprennent un système à clef rotative (34) dont un déverrouillage est commandé par un déplacement du deuxième organe (44) dans une direction déterminée par rapport au deuxième objet (12).

2. Dispositif selon la revendication 1, caractérisé par le fait que le deuxième organe comprend une tige (44) dont une extrémité est normalement fixée au deuxième objet (12) par le mécanisme de blocage déverrouillable (80,82,84), ladite direction étant orientée selon un axe de la tige (44) en éloignement du deuxième objet (12).

3. Dispositif selon la revendication 2, caractérisé par le fait que la tige (44) supporte une bague rotative (54) portant au moins une clef (60) normalement en appui contre une face (61) du premier organe (34), dans une première position angulaire de la bague par rapport au premier organe, ladite clef (60) étant apte à traverser une entaille (65) formée dans ladite face (61), dans une seconde position angulaire de la bague par rapport au premier organe, des moyens (56,58) étant prévus pour commander une rotation de la bague de la première à la seconde position angulaire, lorsque la tige (44) se déplace dans ladite direction.

4. Dispositif selon la revendication 3, caractérisé par le fait que les moyens pour commander une rotation de la bague (54) comprennent au moins un ensemble doigt (58)-rainure (56) interposé entre la bague (54) et une pièce (14) liée au deuxième objet (12).

5. Dispositif selon la revendication 4, caractérisé par le fait que ladite pièce (14) est prévue pour être fixée au deuxième objet (12) et supporte les moyens (86) initiateurs de déverrouillage.

6. Dispositif selon la revendication 4, caractérisé par le fait que ladite pièce est un piston éjecteur annulaire (64), apte à se déplacer dans ladite direction par rapport au deuxième objet (12).

7. Dispositif selon l'une quelconque des revendications précédentes, caractérisé par le fait que le mécanisme de blocage déverrouillable comprend un écrou segmenté (48), normalement en prise sur une partie filetée (46) du deuxième organe (44) et en appui contre une surface de butée (47) liée au deuxième objet (12), un manchon (80) encerclant normalement cet écrou segmenté, ce manchon étant décalé axialement par rapport à l'écrou segmenté (48) lors d'un actionnement des moyens (49) initiateurs de déverrouillage.

8. Dispositif selon l'une quelconque des revendications précédentes, caractérisé par le fait que le deuxième objet (12) est un engin spatial.

9. Dispositif selon l'une quelconque des revendications précédentes, caractérisé par le fait qu'il comprend de plus des moyens élastiques (50) tendant à déplacer le deuxième organe (44) dans ladite direction déterminée.
